# EUROPÄISCHE PATENTSCHRIFT

(11) **EP 3 180 174 B1**
(45) Veröffentlichungstag und Bekanntmachung des Hinweises auf die Patenterteilung: **27.06.2018**
(21) Anmeldenummer: 15750003.4
(22) Anmeldetag: 27.07.2015
(51) Int. Cl.: B29C 33/48, B29C 70/32, B29L 22/00

(54) **VERFAHREN ZUR HERSTELLUNG EINES FASERVERSTÄRKTEN KUNSTSTOFFBAUTEILS**
METHOD FOR PRODUCING A FIBER-REINFORCED PLASTIC COMPONENT
PROCÉDÉ DE FABRICATION D'UN ÉLÉMENT STRUCTURAL EN MATIÈRE PLASTIQUE RENFORCÉ PAR DES FIBRES

(30) Priorität: 12.08.2014 DE 102014215965
(43) Veröffentlichungstag der Anmeldung: 21.06.2017
(73) Patentinhaber: Bayerische Motoren Werke Aktiengesellschaft, 80809 München (DE)
(72) Erfinder: MERSMANN, Christoph, 84032 Landshut (DE); LEMKO, Beniamin, 84028 Landshut (DE)
(86) Internationale Anmeldenummer: PCT/EP2015/067130
(87) Internationale Veröffentlichungsnummer: WO 2016/023736

(56) Entgegenhaltungen:
- EP-A1- 2 497 623
- EP-A1- 2 527 122
- FR-A1- 2 898 539
- US-A- 5 547 629
- US-A1- 2011 277 918

## Beschreibung

Die vorliegende Erfindung betrifft ein Verfahren und eine entsprechende Vorrichtung zur Herstellung eines faserverstärkten Kunststoffbauteils. Das Kunststoffbauteil ist insbesondere für den Einsatz in einem Kraftfahrzeug vorgesehen.

Der Stand der Technik kennt beispielsweise aus der Druckschrift DE 10 2007 027 775 A1 ein Verfahren zur Herstellung eines faserverstärkten Kunststoffbauteils mittels Resin Transfer Moulding. Hierbei werden blasgeformte Hohlkerne aus thermoplastischem Kunststoff verwendet. Die Hohlkerne werden mit Fasermaterial umwickelt, um im nachfolgenden Prozess mit Wasser befüllt, um dem hohen Injektionsdruck des einströmenden Harzes standhalten zu können.

Dokument EP 2 497 623 offenbart die allgemeinen Kenntnisse des Fachmanns über ein Verfahren zur Herstellung eines faserverstärkten Kunststoffbauteils, umfassend die Schritte: Bereitstellen eines blasgeformten Hohlkerns, Formen des faserverstärkten Kunststoffbauteils auf dem Hohlkern und Ziehen des Hohlkerns aus dem Kunststoffbauteil. Es ist Aufgabe vorliegender Erfindung ein Verfahren zur Herstellung eines faserverstärkten Kunststoffbauteils anzugeben, das bei kostengünstiger Durchführung prozesssicher ist und sich somit für die industrielle Herstellung eignet. Des Weiteren soll eine entsprechende Vorrichtung zur Durchführung des Verfahrens angegeben werden.

Somit wird die Aufgabe gelöst durch ein Verfahren zur Herstellung eines faserverstärkten Kunststoffbauteils. Insbesondere wird das so gewonnene Kunststoffbauteil in einem Kraftfahrzeug verwendet. Das Verfahren umfasst zumindest die folgenden Schritte in gegebener Reihenfolge: (i) Bereitstellen eines blasgeformten Hohlkerns, (ii) Formen des faserverstärkten Kunststoffbauteils auf dem Hohlkern, (iii) Einsetzen eines Endes des Hohlkerns zwischen eine erste Walze und ein Gegenelement, und (iv) Ziehen des Hohlkerns aus dem Kunststoffbauteil durch rotatorischen Antrieb der Walze. Das Gegenelement ist insbesondere als weitere Walze ausgebildet, sodass ein Walzenpaar verwendet wird. Der "rotatorische Antrieb" meint, dass die Walze beispielsweise über einen Elektromotor angetrieben wird. Es erfolgt also keine rotatorische indirekte Bewegung der Walze durch anderweitiges Bewegen des Hohlkerns. Vielmehr wird der Hohlkern mittels des rotatorischen Antriebs der Walze bewegt.

Im Rahmen der Erfindung wurde auch in Erwägung gezogen, den Hohlkern mittels einer Zange einzuspannen und über eine Seilwinde aus dem Kunststoffbauteil herauszuziehen. U. a. hat sich dabei als nachteilig gezeigt, dass der sehr lange Hohlkern über einen weiten Weg ausgezogen oder um die Seilwinde aufgewickelt wird. Bei dem Ziehen am Ende des Hohlkerns längt sich der Kern um das mehrfache, wobei lokale Kraftüberhöhungen insbesondere an der entstehenden Verjüngung zu undefiniertem Reißen des Hohlkerns vor dem vollständigen Auszug führen. So wurde im Rahmen der Erfindung erkannt, dass für die Produktion entsprechender Stückzahlen mit der entsprechenden Qualität der Hohlkern durch die antreibbare erste Walze und das Gegenelement herausgezogen werden muss. Direkt hinter der Kombination aus erster Walze und entsprechendem Gegenelement kann der entfernte Hohlkern recycelt werden.

Beim Ziehen des Hohlkern längt sich dieser regelmäßig. Allerdings ist zum Lösen des Hohlkerns vom Kunststoffbauteil bevorzugt ein definierter Verfahrensschritt zum Längen des Hohlkerns vorgesehen. Hierbei erfolgt zusätzlich zum Einsetzen des Hohlkerns zwischen die erste Walze und das erste Gegenelement noch ein Einsetzen zumindest eines weiteren Endes des Hohlkerns in eine Haltevorrichtung. Zum Längen des Hohlkerns erfolgt dann ein rotatorischer Antrieb der ersten Walze und/oder ein Bewegen des weiteren Endes mittels der Haltevorrichtung. Die beiden Enden des Hohlkerns liegen dabei vorzugsweise gegenüber. Bei Längen des Hohlkerns wird dieser gestreckt und löst sich somit vom Kunststoffbauteil. Dies wird insbesondere bei sehr langen Kunststoffbauteilen durchgeführt.

Nach dem Längen des Hohlkerns ist bevorzugt vorgesehen, dass die Haltevorrichtung wieder gelöst wird und somit der Hohlkern über die erste Walze und das erste Gegenelement herausgezogen werden kann. Allerdings kann es auch sein, dass der Hohlkern beim Längen reißt. Sodann wird der Hohlkern sowohl über die erste Walze als auch über die Haltevorrichtung herausgezogen.

Die Haltevorrichtung umfasst vorzugsweise eine zweite Walze und ein entsprechendes zweites Gegenelement. Zwischen die zweite Walze und das zweite Gegenelement wird das weitere Ende des Hohlkerns eingesetzt. Beim Längen des Hohlkerns ist vorgesehen, dass die erste Walze und/oder auch die zweite Walze rotatorisch angetrieben werden.

Das erste Gegenelement und/oder das zweite Gegenelement sind vorzugsweise als weitere Walzen ausgebildet. Diese weiteren Walzen können rotatorisch antreibbar oder frei rotierbar sein. Die erste Walze zusammen mit dem ersten Gegenelement stellt somit ein erstes Walzenpaar dar. Die zweite Walze mit dem zweiten Gegenelement stellt somit ein zweites Walzenpaar dar.

Der Hohlkern besteht vorzugsweise aus thermoplastischem Kunststoff und kann somit recycelt werden. Hierzu wird der gezogene Hohlkern aufgeschmolzen und zu einem neuen Hohlkern verarbeitet.

Insbesondere ist vorgesehen, dass vor dem Aufschmelzen des Hohlkerns zumindest eines der Enden des Hohlkerns entfernt wird und nicht zu einem neuen Hohlkern verarbeitet wird. Die Enden des Hohlkerns weisen üblicherweise Verunreinigungen auf und sollten deshalb dem Recyclingprozess nicht zugeführt werden.

Vor dem Aufschmelzen des Hohlkerns erfolgt vorzugsweise ein Zerkleinern des gezogenen Hohlkerns. Dieses Zerkleinern erfolgt vorzugsweise direkt hinter den Walzen. Das Entfernen der Enden erfolgt vorzugsweise vor dem Zerkleinern des Hohlkerns.

Vorteilhafterweise ist vorgesehen, dass beim Formen des Kunststoffbauteils der Hohlkern mit einem flüssigen Medium, insbesondere Wasser, gefüllt ist. Vor dem Ziehen des Hohlkerns wird das flüssige Medium abgelassen.

Das Formen des Hohlkerns erfolgt vorzugsweise mittels Resin Transfer Moulding in einem entsprechenden Werkzeug. Vor dem Einsetzen des Hohlkerns in das Werkzeug wird der Hohlkern mit entsprechenden Verstärkungsfasern, insbesondere aus Kohlenstoff und/oder Glas, umwickelt oder beflochten. Im Werkzeug wird Kunststoff, insbesondere Harz, in und auf die Verstärkungsfasern injiziert.

Nach dem Formen des faserverstärkten Kunststoffbauteils wird der Hohlkern samt dem Kunststoffbauteil vorzugsweise in eine entsprechende Abkühlvorrichtung eingesetzt. Diese Abkühlvorrichtung entspricht mit ihren inneren Abmaßen in Etwa dem Werkzeug, sodass hier von einer werkzeuganalogen Abkühlvorrichtung gesprochen wird. Innerhalb dieser Abkühlvorrichtung ist das Kunststoffbauteil fixiert, sodass hier vorzugsweise auch das Ziehen des Hohlkerns erfolgt. Allerdings ist alternativ auch vorgesehen, dass zum Ziehen des Hohlkerns das Kunststoffbauteil im Werkzeug des Resin Transfer Moulding-Prozesses verbleibt.

Bevorzugt ist vorgesehen, dass Unterdruck im Hohlkern erzeugt wird, wodurch der Hohlkern nach der Harzinjektion und dem Aushärteprozess im Werkzeug kollabiert werden kann, sodass der Auszug des Kerns aus dem Bauteil mit geringerem Kraftaufwand gelingt. Dies kann zusätzlich oder alternativ zum Längen des Hohlkerns erfolgen.

Die Erfindung umfasst des Weiteren eine Vorrichtung zur Durchführung des soeben beschriebenen Verfahrens. Die Vorrichtung umfasst hierzu eine erste Walze und ein entsprechendes Gegenelement, vorzugsweise ausgebildet als weitere Walze. Die erste Walze und das erste Gegenelement dienen, wie im Verfahren beschrieben wurde, zum Einsetzen des Endes des Hohlkerns und zum Ziehen des Hohlkerns.

Die im Rahmen des Verfahrens beschriebenen vorteilhaften Ausgestaltungen und Unteransprüche finden entsprechend vorteilhafte Anwendung auf die erfindungsgemäße Vorrichtung.

So ist insbesondere vorgesehen, dass die erfindungsgemäße Vorrichtung vorzugsweise auch die Haltevorrichtung umfasst. Die Haltevorrichtung wiederum umfasst vorzugsweise die zweite Walze und das zweite Gegenelement.

Die im Rahmen der Erfindung beschriebene Methode zum Ziehen des Hohlkerns über die erste Walze, vorzugsweise über das erst Walzenpaar, erfordert im Gegensatz zum Stand der Technik einen geringeren anlagentechnischen Aufwand.

Weitere Einzelheiten, Merkmale und Vorteile der Erfindung ergeben sich aus der nachfolgenden Beschreibung und den Figuren.

Es zeigen:
- Figur 1: erste Schritte des erfindungsgemäßen Verfahrens gemäß einem Ausführungsbeispiel;
- Figuren 2 - 6: Schritte des erfindungsgemäßen Verfahrens gemäß dem Ausführungsbeispiel zum Entfernen des Hohlkerns aus dem Kunststoffbauteil.

Im Folgenden wird ein Ausführungsbeispiel des erfindungsgemäßen Verfahrens anhand der begleitenden Zeichnungen beschrieben.

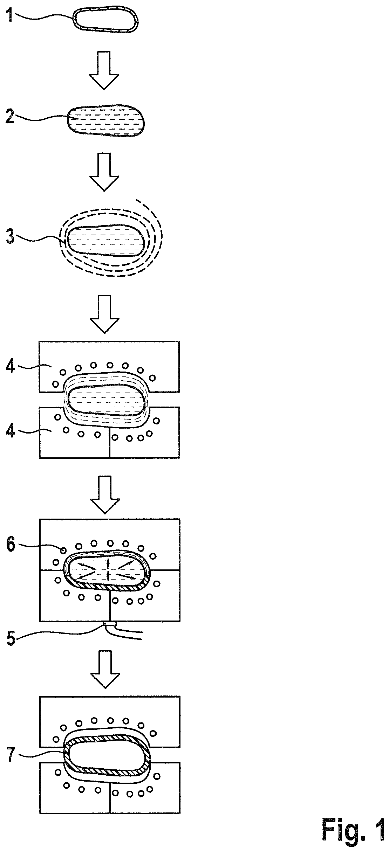

Figur 1 zeigt anhand mehrerer schematischer Darstellungen das Bereitstellen eines blasgeformten Hohlkerns 1 und das Formen eines faserverstärkten Kunststoffbauteils 7 auf dem Hohlkern 1 durch Resin Transfer Moulding.

Zunächst wird ein aus einem thermoplastischen Kunststoff durch blasformen hergestellter Hohlkern 1 bereitgestellt. Der Hohlkern 1 bildet die innere Kontur für das herzustellende Kunststoffbauteil 7.

Der Hohlkern 1 ist aus Kostengründen sehr dünnwandig. Im unbelasteten Zustand ist der Hohlkern 1 formstabil. Spätestens beim Injizieren des Harzes wird der Hohlkern 1 jedoch mit einem flüssigen Medium, insbesondere Wasser, befüllt. Nach dem Befüllen des Hohlkerns 1 wird dieser verschlossen.

Der Hohlkern 1 wird mit Verstärkungsfasern 3, insbesondere aus Kohlenstoff, umflochten. Insbesondere wenn der Hohlkern 1 mit Verstärkungsfasern 3 mit relativ hoher Zugspannung umwickelt wird, bietet es sich an, den Hohlkern 1 schon vor dem Umwickeln mit dem flüssigen Medium zu füllen.

Der umflochtene Hohlkern 1 wird nachfolgend in ein Werkzeug 4 für den Resin Transfer Moulding-Prozess eingelegt. Die Kavität des Werkzeugs 4 entspricht der Außenkontur des herzustellenden Kunststoffbauteils 7. Nach dem Schließen des Werkzeugs 4 wird ein System aus Epoxidharz und Härter mittels eines Einfüllsystems 5 in den Zwischenraum zwischen dem Hohlkern 1 und dem Werkzeug 4 unter einem Druck von beispielsweise 80 bar injiziert.

Durch ein Aufheizen des Werkzeugs 4, indem eine entsprechend temperierte Flüssigkeit durch Heizrohre 6 geleitet wird, wird die Kunststoffmatrix abschließend ausgehärtet. Nach dem Aushärten der Kunststoffmatrix wird das flüssige Medium aus dem Hohlkern 1 abgelassen.

Daraufhin erfolgt ein Entfernen des Hohlkerns 1 aus dem Kunststoffbauteil 7. Dabei verbleibt das Kunststoffbauteil 7 entweder in dem Werkzeug 4 oder wird in eine werkzeuganaloge Abkühlvorrichtung eingesetzt.

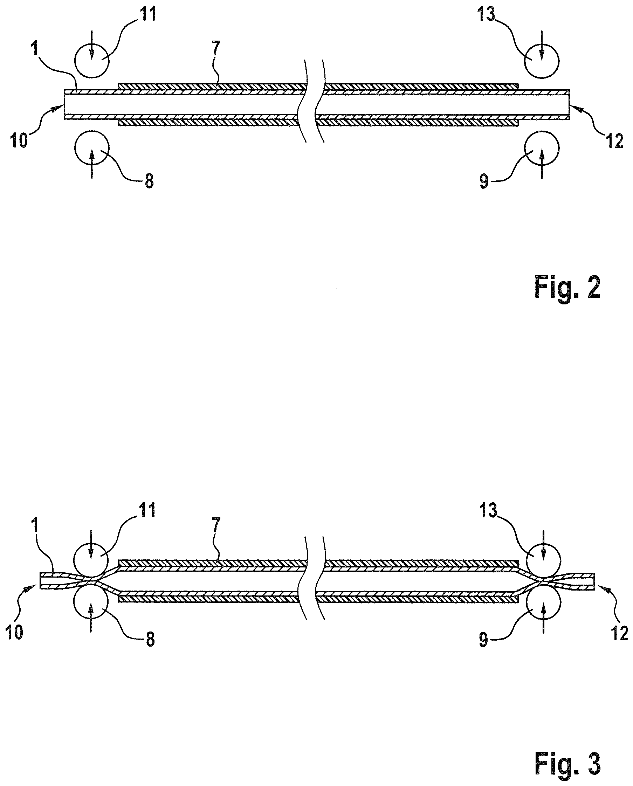

Die Figuren 2 - 6 zeigen die entsprechenden Schritte zum Entfernen des Hohlkerns 1. Die Figuren zeigen die Verfahrensschritte rein schematisch. Insbesondere das Kunststoffbauteil 7 ist dabei vereinfacht dargestellt und steht stellvertretend für Kunststoffbauteile 7 mit unterschiedlichster Geometrie, insbesondere für relativ lange Kunststoffbauteile 7.

Eine Vorrichtung zur Durchführung des Verfahrens umfasst eine erste Walze 8 mit einem zugehörigen ersten Gegenelement 11. Das erste Gegenelement 11 ist im Aufführungsbeispiel ebenfalls als Walze ausgebildet. Zumindest die erste Walze 8, vorzugsweise auch das erste Gegenelement 11, ist rotatorisch antreibbar.

Wie die entsprechenden Pfeile in Figur 2 zeigen, können die erste Walze 8 und das erste Gegenelement 11 aufeinander zubewegt werden. Dadurch kann ein Ende 10 des Hohlkerns 1 zwischen der ersten Walze 8 und dem ersten Gegenelement 11 eingesetzt werden.

Figur 2 zeigt ferner an einem gegenüber liegenden weiteren Ende 12 des Hohlkerns 1 eine zweite Walze 9 mit einem zweiten Gegenelement 13. Auch das zweite Gegenelement 13 ist hier als Walze ausgebildet. Die zweite Walze 9 und vorzugsweise auch das zweite Gegenelement 13 sind rotatorisch antreibbar. Das weitere Ende 12 ist durch Bewegen der zweiten Walze 9 und des zweiten Gegenelementes 13 einklemmbar.

Alternativ zur Ausbildung der beiden Gegenelemente 11, 13 als Walzen, können diese Gegenelemente 11, 13 auch als Gleitflächen ausgebildet werden. So ist es jeweils ausreichend zum Einklemmen und zum Bewegen des Hohlkerns 1, dass an beiden Enden 10, 12 zumindest eine Walze 8, 9 vorgesehen ist.

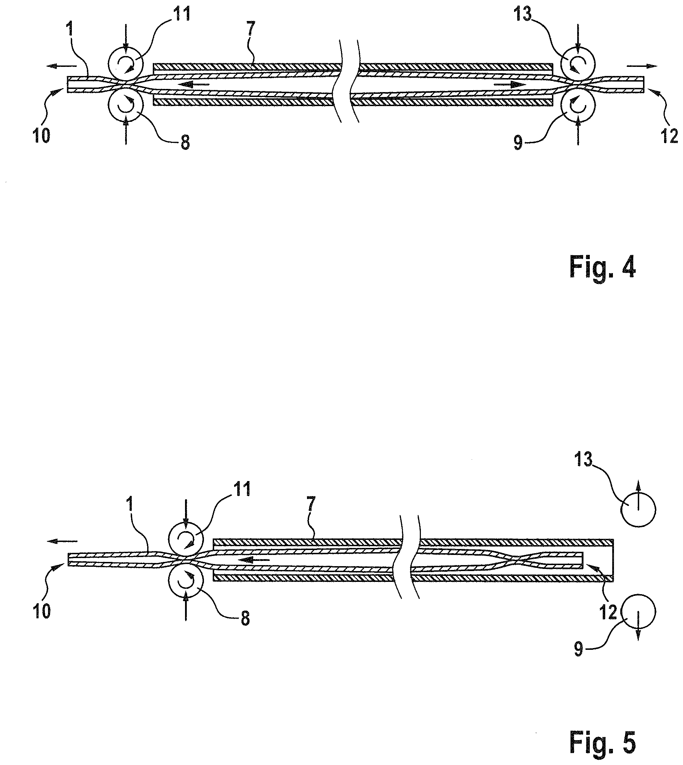

Figuren 3 und 4 zeigen das Längen des Hohlkerns 1. Gemäß Figur 3 sind die beiden Enden 10, 12 zwischen den Walzenpaaren eingeklemmt. Gemäß Figur 4 werden die beiden Walzen 8, 9 und vorzugsweise auch die Gegenelemente 11, 13 derart angetrieben, dass die beiden Enden 10, 12 in unterschiedliche, vorzugsweise in entgegengesetzte Richtungen gezogen werden. Dadurch längtt sich der Hohlkern 1 und löst sich gleichzeitig vom Kunststoffbauteil 7.

Anstatt der zweiten Walze 9 und dem zweiten Gegenelement 13 könnte auch nur eine einfache Haltevorrichtung zum Fixieren des weiteren Endes 12 verwendet werden. Auch dann ist ein Längen und gleichzeitiges Lösen des Hohlkerns 1 möglich. Insbesondere für sehr lange Bauteile bietet es sich jedoch an, gemäß Figur 4 zum Längen an beiden Enden 10, 12 zu ziehen.

Figur 5 zeigt das Ziehen des Hohlkerns 1 aus dem Kunststoffbauteil 7. Hierzu wird das weitere Ende 12 aus der Fixierung zwischen der zweiten Walze 9 und dem zweiten Gegenelement 13 gelöst und mittels der ersten Walze 8 und dem ersten Gegenelement 11 aus dem Kunststoffbauteil 7 herausgezogen.

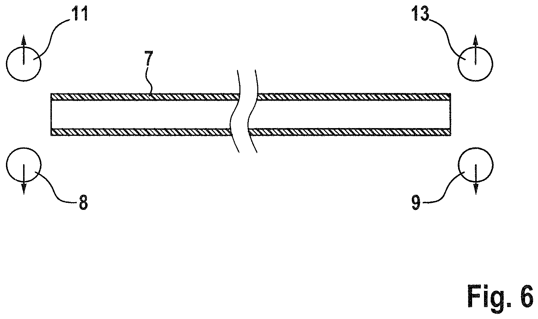

Figur 6 zeigt das Kunststoffbauteil 7 ohne Hohlkern 1.

Der Hohlkern 1 kann direkt nach dem Herausziehen gemäß Figur 5 zerkleinert und recycelt werden. Insbesondere werden dabei die Enden 10, 12 aufgrund von Verunreinigungen nicht für die Herstellung neuer Hohlkerne 1 verwendet.

### Bezugszeichenliste:

- 1.: Hohlkern
- 2.: Flüssiges Medium
- 3.: Verstärkungsfasern
- 4.: Werkzeug
- 5.: Einfüllsystem
- 6.: Heizrohre
- 7.: Kunststoffbauteil
- 8.: erste Walze
- 9.: zweite Walze
- 10.: Ende
- 11.: erstes Gegenelement
- 12.: weiteres Ende
- 13.: zweites Gegenelement

## Patentansprüche

1. Verfahren zur Herstellung eines faserverstärkten Kunststoffbauteils (7), insbesondere für den Einsatz in einem Kraftfahrzeug, umfassend die folgenden Schritte:
- Bereitstellen eines blasgeformten Hohlkerns (1),
- Formen des faserverstärkten Kunststoffbauteils (7) auf dem Hohlkern (1);
- Einsetzen eines Endes (10) des Hohlkerns (1) zwischen eine erste Walze (8) und ein erstes Gegenelement (11), und
- Ziehen des Hohlkerns (1) aus dem Kunststoffbauteil (7) durch rotatorischen Antrieb der ersten Walze (8).

2. Verfahren nach Anspruch 1, **dadurch gekennzeichnet, dass** vor dem Ziehen des Hohlkerns (1) ein Längen des Hohlkerns (1) mit folgenden Schritten erfolgt:
- Einsetzen zumindest eines weiteren Endes (12) des Hohlkerns (1) in eine Haltevorrichtung und
- Längen des Hohlkerns (1) durch rotatorischen Antrieb der ersten Walze (8) und/oder durch Bewegen des weiteren Endes (12) mittels der Haltevorrichtung zum Lösen des Hohlkerns (1) vom Kunststoffbauteil (7).

3. Verfahren nach Anspruch 2, **dadurch gekennzeichnet, dass** die Haltevorrichtung eine zweite Walze (9) und ein zweites Gegenelement (13) umfasst, wobei zum Längen die erste Walze (8) und/oder die zweite Walze (9) rotatorisch angetrieben werden.

4. Verfahren nach einem der vorherigen Ansprüche, **dadurch gekennzeichnet, dass** das erste Gegenelement (11) und /oder das zweite Gegenelement (12) als weitere Walzen ausgebildet sind, wobei die weiteren Walzen rotatorisch antreibbar oder frei rotierbar sind.

5. Verfahren nach einem der vorhergehenden Ansprüche, **dadurch gekennzeichnet, dass** der gezogene Hohlkern (1) aus thermoplastischem Kunststoff aufgeschmolzen und zu einem neuen Hohlkern (1) verarbeitet wird.

6. Verfahren nach Anspruch 5, **dadurch gekennzeichnet, dass** vor dem Aufschmelzen, vorzugsweise vor einem Zerkleinern, des Hohlkerns (1) zumindest eines der Enden (10, 12) des Hohlkerns (1) entfernt und nicht zu einem neuen Hohlkern (1) verarbeitet wird.

7. Verfahren nach einem der vorhergehenden Ansprüche, **dadurch gekennzeichnet, dass** der Hohlkern (1) beim Formen des Kunststoffbauteils (7) mit einem flüssigen Medium (2) gefüllt ist, wobei vor dem Ziehen des Hohlkerns (1) das flüssige Medium (2) abgelassen wird.

8. Verfahren nach einem der vorhergehenden Ansprüche, **dadurch gekennzeichnet, dass** das Formen des Hohlkerns (1) mittels Resin Transfer Moulding in einem Werkzeug (4) erfolgt.

9. Verfahren nach einem der vorhergehenden Ansprüche, **dadurch gekennzeichnet, dass** das Kunststoffbauteil (7) während dem Ziehen des Hohlkerns (1) im Werkzeug (4) oder in einer werkzeuganalogen Abkühlvorrichtung sitzt.

10. Verfahren nach einem der vorhergehenden Ansprüche, **dadurch gekennzeichnet, dass** Unterdruck im Hohlkern (1) erzeugt wird, wodurch der Hohlkern (1) kollabiert und sich vom Kunststoffbauteil (7) löst.

11. Vorrichtung zur Durchführung eines Verfahrens nach einem der vorhergehenden Ansprüche, umfassend eine erste Walze (8) und ein erstes Gegenelement (11) zum Einsetzen eines Endes (10) des Hohlkerns (1) und zum Ziehen des Hohlkerns (1) aus dem Kunststoffbauteil (7) durch rotatorischen Antrieb der ersten Walze (8).

## Claims

1. A method for producing a fibre-reinforced plastics-material component (7), especially for use in a motor vehicle, comprising the following steps:
- providing a blow-moulded hollow core (1),
- moulding the fibre-reinforced plastics-material component (7) on the hollow core (1);
- inserting an end (10) of the hollow core (1) between a first roller (8) and a first counter-element (11), and
- drawing the hollow core (1) out of the plastics-material component (7) by driving the first roller (8) in rotation.

2. A method according to Claim 1, **characterised in that** prior to the drawing of the hollow core (1) lengthening of the hollow core (1) having the following steps takes place:
- inserting at least one further end (12) of the hollow core (1) into a holding device, and
- lengthening of the hollow core (1) by driving the first roller (8) in rotation and/or by moving the further end (12) by means of the holding device to detach the hollow core (1) from the plastics-material component (7).

3. A method according to Claim 2, **characterised in that** the holding device comprises a second roller (9) and a second counter-element (13), wherein the first roller (8) and/or the second roller (9) can be driven in rotation for the purpose of lengthening.

4. A method according to one of the preceding claims, **characterised in that** the first counter-element (11) and/or the second counter-element (12) are designed as further rollers, the further rollers being able to be driven in rotation or being freely rotatable.

5. A method according to one of the preceding claims, **characterised in that** the drawn hollow core (1), which is made of thermoplastic material, is melted and is processed into a new hollow core (1).

6. A method according to Claim 5, **characterised in that** prior to the melting, preferably prior to comminution, of the hollow core (1) at least one of the ends (10, 12) of the hollow core (1) is removed and not processed into a new hollow core (1).

7. A method according to one of the preceding claims, **characterised in that** the hollow core (1) upon moulding the plastics-material component (7) is filled with a liquid medium (2), with the liquid medium (2) being drained prior to the drawing of the hollow core (1).

8. A method according to one of the preceding claims, **characterised in that** the moulding of the hollow core (1) takes place by means of resin transfer moulding in a mould (4).

9. A method according to one of the preceding claims, **characterised in that** the plastics-material component (7) during the drawing of the hollow core (1) is located in the mould (4) or in a cooling device analogous to a mould.

10. A method according to one of the preceding claims, **characterised in that** underpressure is generated in the hollow core (1), causing the hollow core (1) to collapse and become detached from the plastics-material component (7).

11. A device for carrying out a method according to one of the preceding claims, comprising a first roller (8) and a first counter-element (11) for inserting an end (10) of the hollow core (1) and for drawing the hollow core (1) out of the plastics-material component (7) by driving the first roller (8) in rotation.

## Revendications

1. Procédé d'obtention d'un élément en matériau synthétique renforcé par des fibres (7), en particulier destiné à être inséré dans un véhicule comprenant les étapes suivantes consistant à :
- se procurer un noyau creux (1) formé par soufflage,
- mouler l'élément en matériau synthétique renforcé par des fibres (7) sur le noyau creux (1),
- introduire une extrémité (10) du noyau creux (1) entre un premier rouleau (8) et un premier élément antagoniste (11), et
- tirer le noyau creux (1) pour l'extraire de l'élément en matériau synthétique (7) par entraînement en rotation du premier rouleau (8).

2. Procédé conforme à la revendication 1,
**caractérisé en ce qu'**
avant l'étape consistant à tirer le noyau creux (1), un allongement du noyau creux (1), est effectué avec les étapes suivantes consistant à :
- introduire au moins une autre extrémité (12) du noyau creux (1) dans un dispositif de retenue, et
- allonger le noyau creux (1) par entraînement en rotation du premier rouleau (8) et/ou par déplacement de l'autre extrémité (12) au moyen du dispositif de retenue pour détacher le noyau creux (1) de l'élément en matériau synthétique (7).

3. Procédé conforme à la revendication 2,
**caractérisé en ce que**
le dispositif de retenue comporte un second rouleau (9) et un second élément antagoniste (13), pour permettre l'allongement, le premier rouleau (8) et/ou le second rouleau (9) étant entraîné(s) en rotation.

4. Procédé conforme à l'une des revendications précédentes,
**caractérisé en ce que**
le premier élément antagoniste (11) et le second élément antagoniste (12) sont réalisés sous la forme d'autres rouleaux, les autres rouleaux pouvant être entraînés en rotation ou étant librement rotatifs.

5. Procédé conforme à l'une des revendications précédentes,
**caractérisé en ce que**
le noyau creux (1) en matériau thermoplastique tiré est fondu et retraité pour obtenir un nouveau noyau creux (1).

6. Procédé conforme à la revendication 5,
**caractérisé en ce qu'**
avant la fusion, de préférence avant un broyage du noyau creux (1), au moins l'une des extrémités (10, 12) de ce noyau creux (1) est évacuée et n'est pas traitée pour obtenir un nouveau noyau creux (1).

7. Procédé conforme à l'une des revendications précédentes,
**caractérisé en ce que**
lors du moulage de l'élément en matériau synthétique (7), le noyau creux (1) est rempli d'un liquide (2), et, avant de tirer le noyau creux (1), le liquide (2) est évacué.

8. Procédé conforme à l'une des revendications précédentes,
**caractérisé en ce que**
le moulage du noyau creux (1) est effectué par moulage par injection de résine dans un outil (4).

9. Procédé conforme à l'une des revendications précédentes,
**caractérisé en ce que**
pendant le tirage du noyau creux (1) l'élément en matériau synthétique (7) est situé dans l'outil (4) ou dans un dispositif de refroidissement analogue à un outil.

10. Procédé conforme à l'une des revendications précédentes,
**caractérisé en ce que**
dans le noyau creux (1) est produite une dépression permettant de le calibrer et de l'extraire de l'élément (7) en matériau synthétique.

11. Dispositif permettant la mise en oeuvre du procédé conforme à l'une des revendications précédentes, comportant un premier rouleau (8) et un premier élément antagoniste (11) permettant d'introduire une extrémité (10) du noyau creux (1) et de le tirer pour l'extraire de l'élément en matériau synthétique (7) par entraînement en rotation du premier rouleau (8).
